(19) **Europäisches Patentamt / European Patent Office / Office européen des brevets**

(11) **EP 3 222 653 A1**

(12) # EUROPEAN PATENT APPLICATION

(43) Date of publication:
**27.09.2017 Bulletin 2017/39**

(51) Int Cl.:
*C08J 5/04* (2006.01)   *C08L 69/00* (2006.01)

(21) Application number: **16185454.2**

(22) Date of filing: **24.08.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **22.03.2016 JP 2016057470**

(71) Applicant: **Fuji Xerox Co., Ltd.**
**Minato-ku,**
**Tokyo (JP)**

(72) Inventors:
• OKOSHI, Masayuki
  **Minamiashigara-shi, Kanagawa (JP)**
• MORIYA, Hiroyuki
  **Minamiashigara-shi, Kanagawa (JP)**
• MIYAMOTO, Tsuyoshi
  **Minamiashigara-shi, Kanagawa (JP)**
• IWADATE, Yuko
  **Minamiashigara-shi, Kanagawa (JP)**
• NAKAYAMA, Daisuke
  **Minamiashigara-shi, Kanagawa (JP)**

(74) Representative: **Margue, Robert Germain**
**Haseltine Lake LLP**
**Bürkleinstrasse 10**
**80538 München (DE)**

(54) **RESIN COMPOSITION, RESIN MOLDED ARTICLE, AND METHOD FOR PREPARING RESIN COMPOSITION**

(57)   The invention is directed to a resin composition containing polycarbonate, reinforced fibers and a compatibilizer having a reactive cyclic group, a resin molded article containing polycarbonate, reinforced fibers and a compatibilizer having a reactive cyclic group, and a method for preparing a resin composition including molten kneading polycarbonate, reinforced fibers and compatibilizer having a reactive cyclic group.

EP 3 222 653 A1

**Description**

BACKGROUND

(i) Technical Field

The present invention relates to a resin composition, a resin molded article, and a method for preparing the resin composition.

(ii) Related Art

Various compositions are conventionally provided as the resin composition and used for various purposes.
In particular, the resin composition including a thermoplastic resin is used for various parts or housings of home appliances or automobiles, or parts such as housings of office supplies or electronic and electric devices.
For example, Patent Document 1 discloses "a carbon fiber chopped strand sized by a copolycarbonate resin having a predetermined structural unit and a thermoplastic resin composition containing the carbon fiber chopped strand". In addition, Reference 1 discloses that "the thermoplastic resin is a polycarbonate resin, a polyester resin, or a polymer alloy including these resins as major components".
In addition, Patent Document 2 discloses "a fiber-reinforced thermoplastic resin composition composed of 0.1% to 10% by weight of a (meth)acrylic polymer (A1) having an aminoalkylene group in a branch, 1% to 70% by weight of reinforced fibers (B), and 20% to 98.9% by weight of a thermoplastic resin (C)".

[Patent Document 1] JP-A-6-57640
[Patent Document 2] WO2007/037260

SUMMARY

The present invention provides a resin composition from which a resin molded article having excellent bending modulus of elasticity and tensile modulus of elasticity can be obtained, compared to a case where a compatibilizer having a reactive cyclic group is not included in the resin composition including polycarbonate and reinforced fibers.
Aspects of the invention are as follows.
A first aspect of the invention is a resin composition comprising: polycarbonate; reinforced fibers; and a compatibilizer having a reactive cyclic group.
A second aspect of the invention is the resin composition according to the first aspect, wherein the compatibilizer is at least one selected from the group consisting of oxazoline-modified polystyrene, maleic anhydride-modified polystyrene, and maleimide-modified polystyrene.
A third aspect of the invention is the resin composition according to the first or second aspect, wherein the content of the reinforced fibers is from 0.1 parts by weight to 200 parts by weight with respect to 100 parts by weight of the polycarbonate.
A fourth aspect of the invention is the resin composition according to any one of the first to third aspects, wherein the content of the compatibilizer is from 0.1 parts by weight to 20 parts by weight with respect to 100 parts by weight of the polycarbonate.
A fifth aspect of the invention is the resin composition according to any one of the first to fourth aspects, wherein the content of the compatibilizer is from 1% by weight to 15% by weight with respect to the weight of the reinforced fibers.
A sixth aspect of the invention is she resin composition according to any one of the first to fifth aspects, further comprising: a resin having a solubility parameter (SP value) different from that of the polycarbonate and including at least one of an amide bond and an imide bond.
A seventh aspect of the invention is the resin composition according to the sixth aspect, wherein the resin having a solubility parameter (SP value) different from that of the polycarbonate and including at least one of an amide bond and an imide bond forms a coating layer in the periphery of the reinforced fibers and the thickness of the coating layer is from 50 nm to 700 nm.
An eighth aspect of the invention is the resin composition according to the seventh aspect, wherein a layer of the compatibilizer is inserted between the coating layer and the polycarbonate.
A ninth aspect of the invention is the resin composition according to any one of the sixth to eighth aspects, wherein the resin having a solubility parameter (SP value) different from that of the polycarbonate and including at least one of an amide bond and an imide bond is polyamide.
A tenth aspect of the invention is he resin composition according to any one of the sixth to ninth aspects, wherein the content of the resin having a solubility parameter (SP value) different from that of the polycarbonate and including at least one of an amide bond and an imide bond is from 0.1 parts by weight to 20 parts by weight with respect to 100 parts by weight of the polycarbonate.

An eleventh aspect of the invention is the resin composition according to any one of the sixth to tenth aspects, wherein the content of the resin having a solubility parameter (SP value) different from that of the polycarbonate and including at least one of an amide bond and an imide bond is from 1% by weight to 10% by weight with respect to the weight of the reinforced fibers.

A twelfth aspect of the invention is a resin molded article comprising: polycarbonate; reinforced fibers; and a compatibilizer having a reactive cyclic group.

A thirteenth aspect of the invention is the resin molded article according to the twelfth aspect, wherein the compatibilizer is at least one selected from the group consisting of oxazoline-modified polystyrene, maleic anhydride-modified polystyrene, and maleimide-modified polystyrene.

A fourteenth aspect of the invention is the resin molded article according to the twelfth or thirteenth aspect, wherein the content of the reinforced fibers is from 0.1 parts by weight to 200 parts by weight with respect to 100 parts by weight of the polycarbonate.

A fifteenth aspect of the invention is the resin molded article according to any one of the twelfth to fourteenth aspects, wherein the content of the compatibilizer is from 0.1 parts by weight to 20 parts by weight with respect to 100 parts by weight of the polycarbonate.

A sixteenth aspect of the invention is the resin molded article according to any one of the twelfth to fifteenth aspects, wherein the content of the compatibilizer is from 1% by weight to 15% by weight with respect to the weight of the reinforced fibers.

A seventeenth aspect of the invention is the resin molded article according to any one of the twelfth to sixteenth aspects, further comprising: a resin having a solubility parameter (SP value) different from that of the polycarbonate and including at least one of an amide bond and an imide bond.

An eighteenth aspect of the invention is the resin molded article according to the seventeenth aspect, wherein the resin having a solubility parameter (SP value) different from that of the polycarbonate and including at least one of an amide bond and an imide bond forms a coating layer in the periphery of the reinforced fibers and the thickness of the coating layer is from 50 nm to 700 nm.

A nineteenth aspect of the invention is the resin molded article according to the eighteenth aspect, wherein a layer of the compatibilizer is inserted between the coating layer and the polycarbonate.

A twentieth aspect of the invention is the resin molded article according to any one of the seventeenth to nineteenth aspects, wherein the resin having a solubility parameter (SP value) different from that of the polycarbonate and including at least one of an amide bond and an imide bond is polyamide.

A twenty first aspect of the invention is the resin molded article according to any one of the seventeenth to twentieth aspects, wherein the content of the resin having a solubility parameter (SP value) different from that of the polycarbonate and including at least one of an amide bond and an imide bond is from 0.1 parts by weight to 20 parts by weight with respect to 100 parts by weight of the polycarbonate.

A twenty second aspect of the invention is the resin composition according to any one of the seventeenth to twenty first aspects, wherein the content of the resin having a solubility parameter (SP value) different from that of the polycarbonate and including at least one of an amide bond and an imide bond is from 1% by weight to 10% by weight with respect to the weight of the reinforced fibers.

A twenty third aspect of the invention is a method for preparing the resin composition comprising: molten kneading the polycarbonate, the reinforced fibers, and the compatibilizer having a reactive cyclic group.

According to the first or second aspect of the invention, a resin composition is provided, from which a resin molded article having excellent bending modulus of elasticity and tensile modulus of elasticity can be obtained, compared to a case where a compatibilizer having a reactive cyclic group is not included in the resin composition including the polycarbonate and the reinforced fibers.

According to the third aspect of the invention, a resin composition is provided, from which a resin molded article having excellent moldability, bending modulus of elasticity and tensile modulus of elasticity can be obtained, compared to a case where the content of the reinforced fibers is less than 0.1 parts by weight or more than 200 parts by weight with respect to 100 parts by weight of the polycarbonate.

According to the fourth aspect of the invention, a resin composition is provided, from which a resin molded article having excellent bending modulus of elasticity and tensile modulus of elasticity can be obtained, compared to a case where the content of the compatibilizer is less than 0.1 parts by weight or more than 20 parts by weight with respect to 100 parts by weigh of the polycarbonate.

According to the fifth aspect of the invention, a resin composition is provided, from which a resin molded article having excellent bending modulus of elasticity and tensile modulus of elasticity can be obtained, compared to a case where the content of the compatibilizer is less than 1% by weight or more than 15% by weight with respect to the weight of the reinforced fibers.

According to the sixth aspect of the invention, a resin composition is provided, from which a resin molded article having excellent bending modulus of elasticity and tensile modulus of elasticity can be obtained, compared to a case where the resin having a solubility parameter (SP value) different from that of the polycarbonate and including at least one of an amide bond and an imide bond is not included.

According to the seventh aspect of the invention, a resin composition is provided, from which a resin molded article having excellent bending modulus of elasticity and tensile modulus of elasticity can be obtained, compared to a case where the resin having a solubility parameter (SP value) different from that of the polycarbonate and including at least one of an amide bond and an imide bond does not form a coating layer in the periphery of the reinforced fibers, or the thickness of the coating layer formed by the resin in the periphery of the reinforced fibers is less than 50 nm or more than 700 nm.

According to the eighth aspect of the invention, a resin composition is provided, from which a resin molded article having excellent bending modulus of elasticity and tensile modulus of elasticity can be obtained, compared to a case where the layer of the compatibilizer is not inserted between the coating layer and the polycarbonate.

According to the ninth aspect of the invention, a resin composition is provided, from which a resin molded article having excellent bending modulus of elasticity and tensile modulus of elasticity can be obtained, compared to a case where imidazole is used as the resin having a solubility parameter (SP value) different from that of the polycarbonate and including at least one of an amide bond and an imide bond.

According to the tenth aspect of the invention, a resin composition is provided, from which a resin molded article having excellent bending modulus of elasticity and tensile modulus of elasticity can be obtained, compared to a case where the content of the resin having a solubility parameter (SP value) different from that of the polycarbonate and including at least one of an amide bond and an imide bond is less than 0.1 parts by weight or more than 20 parts by weight with respect to 100 parts by weight of the polycarbonate.

According to the eleventh aspect of the invention, a resin composition is provided, from which a resin molded article having excellent bending modulus of elasticity and tensile modulus of elasticity can be obtained, compared to a case where the content of the resin having a solubility parameter (SP value) different from that of the polycarbonate and including at least one of an amide bond and an imide bond is less than 1% by weight or more than 10% by weight with respect to the weight of the reinforced fibers.

According to the twelfth or thirteenth aspect of the invention, a resin molded article is provided, which has excellent bending modulus of elasticity and tensile modulus of elasticity, compared to a case where a compatibilizer having a reactive cyclic group is not included in the resin molded article including the polycarbonate and the reinforced fibers.

According to the fourteenth aspect of the invention, a resin molded article is provided, which has excellent moldability, bending modulus of elasticity and tensile modulus of elasticity, compared to a case where the content of the reinforced fibers is less than 0.1 parts by weight or more than 200 parts by weight with respect to 100 parts by weight of the polycarbonate.

According to the fifteenth aspect of the invention, a resin molded article is provided, which has excellent bending modulus of elasticity and tensile modulus of elasticity, compared to a case where the content of the compatibilizer is less than 0.1 parts by weight or more than 20 parts by weight with respect to 100 parts by weight of the polycarbonate.

According to the sixteenth aspect of the invention, a resin molded article is provided, which has excellent bending modulus of elasticity and tensile modulus of elasticity, compared to a case where the content of the compatibilizer is less than 1% by weight or more than 15% by weight with respect to the weight of the reinforced fibers.

According to the seventeenth aspect of the invention, a resin molded article is provided, which has excellent bending modulus of elasticity and tensile modulus of elasticity, compared to a case where the resin having a solubility parameter (SP value) different from that of the polycarbonate and including at least one of an amide bond and an imide bond is not included.

According to the eighteenth aspect of the invention a resin molded article is provided, which has excellent bending modulus of elasticity and tensile modulus of elasticity, compared to a case where the resin having a solubility parameter (SP value) different from that of the polycarbonate and including at least one of an amide bond and an imide bond does not form a coating layer in the periphery of the reinforced fibers, or the thickness of the coating layer formed by the resin in the periphery of the reinforced fibers is less than 50 nm or more than 700 nm.

According to the nineteenth aspect of the invention, a resin molded article is provided, which has excellent bending modulus of elasticity and tensile modulus of elasticity, compared to a case where the layer of the compatibilizer is not inserted between the coating layer and the polycarbonate.

According to the twentieth aspect of the invention, a resin molded article is provided, which has excellent bending modulus of elasticity and tensile modulus of elasticity, compared to a case where imidazole is used as the resin having a solubility parameter (SP value) different from that of the polycarbonate and including at least one of an amide bond and an imide bond.

According to the twenty first aspect of the invention, a resin molded article is provided, which has excellent bending modulus of elasticity and tensile modulus of elasticity, compared to a case where the content of the resin having a solubility parameter (SP value) different from that of the polycarbonate and including at least one of an amide bond and an imide bond is less than 0.1 parts by weight or more than 20 parts by weight with respect to 100 parts by weight of the polycarbonate.

According to the twenty second aspect of the invention, a resin molded article is provided, which has excellent bending modulus of elasticity and tensile modulus of elasticity, compared to a case where the content of the resin having a solubility parameter (SP value) different from that of the polycarbonate and including at least one of an amide bond and an imide bond is less than 1% by weight or more than 10% by weight with respect to the weight of the reinforced fibers.

According to the twenty third aspect of the invention, a method for preparing the resin composition is provided, by which the resin molded article having excellent bending modulus of elasticity and tensile modulus of elasticity can be obtained, compared to a case where the method includes molten kneading the polycarbonate and the reinforced fibers without using the compatibilizer having a reactive cyclic group.

BRIEF DESCRIPTION OF THE DRAWINGS

Exemplary embodiments of the present invention will be described in detail based on the following figures, wherein:

Fig. 1 is a model image illustrating one example of main parts of a resin molded article according to an exemplary embodiment;
Fig. 2 is a schematic diagram for describing one example of main parts of the resin molded article according to the exemplary embodiment; and
Fig. 3 is a schematic diagram of an experiment in which a micro droplet method is used.

DETAILED DESCRIPTION

Hereinafter, an embodiment, which is one example of the resin composition and the resin molded article of the exemplary embodiment of the invention, will be described.

Resin composition

The resin composition according to the exemplary embodiment includes polycarbonate, reinforced fibers, and a compatibilizer having a reactive cyclic group.

In recent years, a resin composition including polycarbonate and reinforced fibers is used as a base material (matrix) in order to obtain a resin molded article heaving excellent mechanical strength.

In this resin composition, if affinity between the reinforced fibers and the polycarbonate is low, a space is generated at the interface of both materials, and adhesion of the interface may be deteriorated. This deterioration of adhesion of the interface may cause a decrease in the mechanical strength, in particular, the bending modulus of elasticity and the tensile modulus of elasticity.

Thus, since the resin composition according to the exemplary embodiment includes three components, which are the polycarbonate, reinforced fibers, and compatibilizer having a reactive cyclic group, a resin molded article having excellent bending modulus of elasticity and tensile modulus of elasticity is obtained. It is unclear how this effect is obtained but it is assumed as follows.

When the resin molded article is obtained from the resin composition, if the resin composition is thermally melt and mixed, the polycarbonate and the compatibilizer as the base material are melt, and the compatibilizer is dispersed in the resin composition.

In this state, if the compatibilizer is in contact with the reinforced fibers, the reactive cyclic group of the compatibilizer and a polar group present on the surface of the reinforced fibers (for example, a carboxyl group included in a carbon fiber, a hydroxyl group included in a glass fiber, or the like) are reacted with each other. Since the reactive cyclic group of the compatibilizer (for example, an oxazoline residue, a maleic acid residue, an maleimide residue, or the like) has a cyclic structure, it is considered that when the compatibilizer is dispersed at the time of thermally being melt and mixed, the reaction hardly occurs and when the compatibilizer is in contact with the reinforced fibers, the reaction easily occurs.

From the above, it is assumed that adhesion at the interface between the reinforced fibers and the polycarbonate is increased by the compatibilizer being inserted therebetween, and the resin molded article having excellent mechanical strength, in particular, the bending modulus of elasticity and the tensile strength of elasticity is obtained.

In addition, the adhesion at the interface between the reinforced fibers and the polycarbonate may be evaluated according to the micro droplet method described below.

Meanwhile, the resin composition according to the exemplary embodiment may further include a resin having a solubility parameter (SP value) different from that of the polycarbonate and including at least one of an amide bond and an imide bond (hereinafter, referred to as "a specific resin"). It is assumed that the resin molded article having excellent mechanical strength, in particular, the bending modulus of elasticity and the tensile strength of elasticity is obtained, also because the resin composition further includes the specific resin. It is unclear how this effect is obtained but it is assumed as follows.

When the resin molded article is obtained from the resin composition, if the resin composition is thermally melt and mixed, the polycarbonate and the compatibilizer as the base material are melt, and both of them are compatible with each other in a part within the molecule of the compatibilizer and an amide bond or an imide bond included within the molecule of the specific resin, so that the specific resin is dispersed in the resin composition.

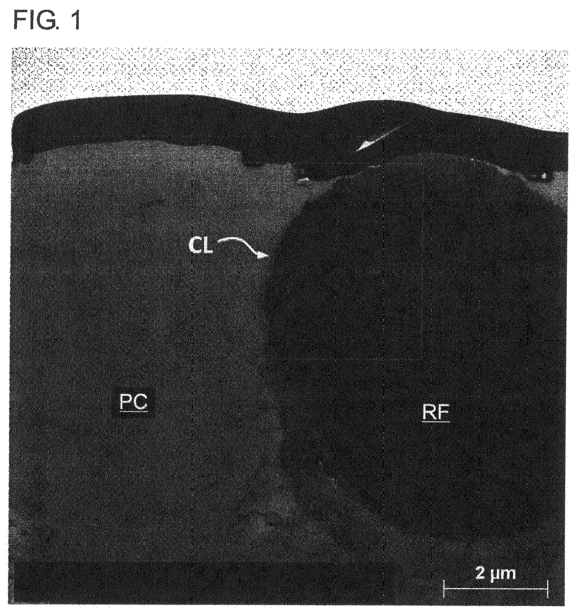

In this state, if the specific resin is in contact with the reinforced fibers, the amide bond or the imide bond included within the molecule of the specific resin and the polar group present on the surface of the reinforced fibers are physically attached to each other by affinity (attraction and a hydrogen bond). In addition, since the polycarbonate and the specific resin have low compatibility because they have different a solubility parameter (SP value), a frequency of contacting the specific resin with the reinforced fibers is increased due to repulsion between the polycarbonate and the specific resin, and as a result, an attachment amount or an attachment area of the specific resin with respect to the reinforced fibers is increased. As such, a coating layer by the specific resin is formed on the periphery of the reinforced fibers (refer to Fig. 1). In Fig. 1, PC indicates the polycarbonate, RF indicates the reinforced fibers, and CL indicates a coating layer.

In addition, since the specific resin forming the coating layer is compatible with the part within the molecule of the compatibilizer, a balanced state between the attraction and repulsion is formed because the compatibilizer is compatible with the polycarbonate, and the coating layer by the specific resin is formed in a state of being thin, which is a thickness of from 50 nm to 700 nm, and almost uniform. In particular, since affinity between a carboxy group or a hydroxyl group present on the surface of the reinforced fibers and the amide bond or the imide bond included within the molecule of the specific resin is high, it is considered that the coating layer by the specific resin is easily formed in the periphery of the reinforced fibers and the coating layer is thin and has excellent uniformity.

From the above, it is assumed that adhesion at the interface between the reinforced fibers and the polycarbonate is increased and the resin molded article having excellent mechanical strength, in particular, the bending modulus of elasticity and the tensile strength of elasticity are obtained.

Here, the resin composition according to the exemplary embodiment also has a structure, in which the coating layer by the specific resin is formed in the periphery of the reinforced fibers by thermal molten kneading and injection molding when the resin composition (for example, pellet) is prepared, and the thickness of the coating layer is from 50 nm to 700 nm.

In the resin composition according to the exemplary embodiment, the thickness of the coating layer by the specific resin is from 50 nm to 700 nm and is preferably from 50 nm to 650 nm, from a viewpoint of further improving the bending modulus of elasticity and the tensile modulus of elasticity. If the thickness of the coating layer is 50 nm or more, the bending modulus of elasticity and the tensile modulus of elasticity are improved, if the thickness of the coating layer is 700 nm or less, the interface between the reinforced fibers and the polycarbonate with the coating layer inserted therebetween is prevented from being weakened, and the bending modulus of elasticity and the tensile modulus of elasticity is prevented from being decreased.

The thickness of the coating layer is a value measured by the following method. The measurement target is made to be broken in liquid nitrogen using an electron microscope (VE-9800 manufactured by KEYENCE CORPORATION), and the cross section is observed. In this cross section, the thickness of the coating layer coating the periphery of the reinforced fibers is measured at 100 points to measure the average value thereof.

The resin composition (and the resin molded article thereof) according to the exemplary embodiment has a configuration, for example, in which the compatibilizer is partially compatible with the space between the coating layer and the polycarbonate.

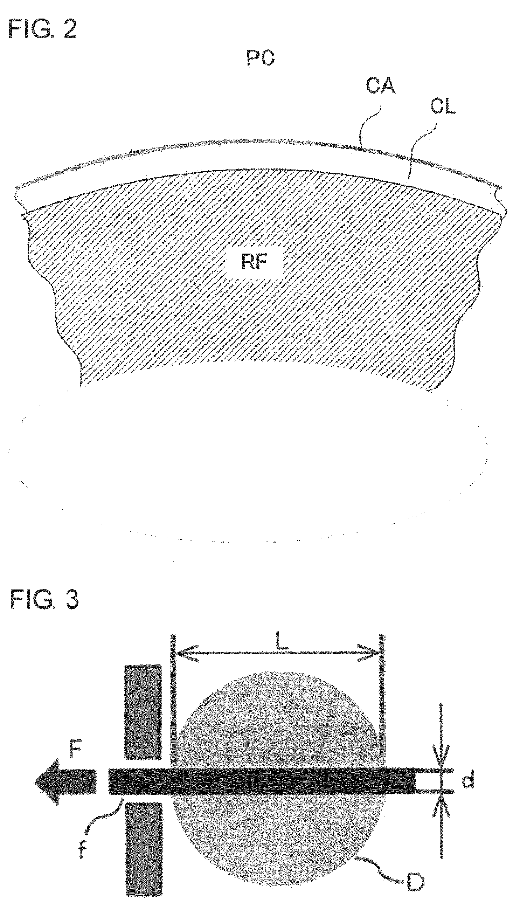

Specifically, for example, a layer of the compatibilizer is inserted between the coating layer by the specific resin and the polycarbonate, which is a base material (refer to Fig. 2). In other words, a layer of the compatibilizer is formed on the surface of the coating layer, and the coating layer and the polycarbonate are adjacent to each other via the layer of the compatibilizer. The layer of the compatibilizer is formed to be thin compared to the coating layer, but adhesion (attachment properties) between the coating layer and the thermoplastic resin is increased by the insertion of the layer of the compatibilizer, and it is easy to obtain the resin molded article having excellent mechanical strength, in particular, the bending modulus of elasticity and the tensile modulus of elasticity. In addition, in Fig. 2, PC indicates the polycarbonate, RF indicates the reinforced fibers, CL indicates a coating layer, and CA indicates the layer of the compatibilizer.

In particular, the layer of the compatibilizer is inserted between the coating layer and the polycarbonate, in a state where the layer of the compatibilizer is bonded to the coating layer (a covalent bond due to the reaction of the functional groups of the compatibilizer and the specific resin), and compatible with the polycarbonate. It is considered that this configuration is realized by the layer of the compatibilizer being inserted in a state where the reactive cyclic group of the compatibilizer and the functional group (for example, an amine residue) included in the specific resin of the coating layer are reacted with each other to be bonded, and a moiety (compatible moiety) other than the reactive cyclic group is compatible with the polycarbonate.

Here, a method for confirming that the layer of the compatibilizer is inserted between the coating layer and the polycarbonate is as follows.

As an analyzer, an infrared spectral analyzer (manufactured by Thermo Fisher Scientific Inc., NICOLET 6700F T-IR) is used. For example, in a case of a resin composition (or a resin molded article) including bisphenol A type polycarbonate (hereinafter, PC) as the polycarbonate, PA 66 as the polyamide, and maleic anhydride-modified polystyrene (hereinafter, MA-PS) as the modified polystyrene, an IR spectrum is obtained by a KBr pellet method with respect to a mixture thereof, a mixture of PC and PA66, and a mixture of PC and MA-PS, and a PC single substance, a PA66 single substance, and a MA-PS single substance as a reference, and a peak area in the wave number range of from 1870cm$^{-1}$ to 1680cm$^{-1}$ and derived from acid anhydride (a peak distinctive of MA-PS) in the mixture is compared and analyzed. It is confirmed that the peak area of the acid anhydride is decreased in the mixture of PC, PA66, and MA-PS, and MA-PS and PA66 react with each other. In this way, it is possible to confirm that the layer of the compatibilizer (a binding layer) is inserted between the coating layer and the polycarbonate. Specifically, if MA-PS and PA66 react with each other, a cyclic maleated moiety of MA-PS is ring-opened to be chemically bonded to an amine residue of PA66, and accordingly the cyclic maleated moiety is reduced. Thus, it is possible to confirm that the layer of the compatibilizer (a binding layer) is inserted between the coating layer and the polycarbonate.

Hereinafter, each component of the resin composition according to the exemplary embodiment will be described in detail.

Polycarbonate

The polycarbonate is a base material of the resin composition and is referred to as a resin component reinforced by the reinforced fibers (also referred to as a matrix resin).

The polycarbonate is not particularly limited and examples thereof include a resin having (-O-R-OCO-) as a repeating unit. In addition, diphenylpropane and P-xylene are exemplified as for R. -O-R-O is not particularly limited as long as -O-R-O is a dioxy compound.

Specific examples of the polycarbonate include aromatic polycarbonate such as bisphenol A type polycarbonate, bisphenol S type polycarbonate, and biphenyl type polycarbonate.

The polycarbonate may be a copolymer of silicone or undecanoic acid amide.

One type of the polycarbonate may be used alone or two or more types thereof may be used in combination.

The molecular weight of the polycarbonate is not particularly limited and may be determined depending on the molding condition or the use of the resin molded article. For example, the weight average molecular weight (Mw) of the polycarbonate is preferably in the range of from 10,000 to 300,000 and more preferably in the range of from 10,000 to 200,000.

In addition, the glass transition temperature (Tg) or the melting point (Tm) of the polycarbonate is not particularly limited in the same manner as the molecular weight, and may be determined depending on the type of the resin, the molding condition, or the use of the resin molded article. For example, the melting point (Tm) of the polycarbonate is preferably in the range of from 100°C to 300°C and more preferably in the range of from 150°C to 250°C.

In addition, the weight average molecular weight (Mw) and the melting point (Tm) indicate the values measured as follows.

That is, the weight average molecular weight (Mw) is measured by Gel Permeation Chromatography (GPC) under the following condition. A high temperature GPC system "HLC-8321 GPC/HT" is used as a GPC apparatus and o-dichlorobenzene is used as an eluent. First, polyolefin is melted in o-dichlorobenzene at a high temperature (a temperature from 140°C to 150°C) once and filtered to obtain a filtrate as a measurement sample. The measurement condition is that a sample concentration is 0.5%, a flow rate is 0.6 ml/min, a sample injection amount is 10 μl, and a RI detector is used. In addition, a calibration curve is created from 10 samples "polystylene standard sample TSK standard" manufactured by TOSOH CORPORATION: "A-500", "F-1", "F-10", "F-80", "F-380", "A-2500", "F-4", "F-40", "F-128, and "F-700".

In addition, the melting point (Tm) is obtained from "melting peak temperature" disclosed in a method for obtaining a melting point of "a method for measuring a transition temperature of plastic" JIS K 7121-1987, from a DSC curve obtained by Differential Scanning Calorimetry (DSC).

The content of the polycarbonate which is a base material may be determined depending on the use of the resin molded article. The content of the polycarbonate is preferably from 5% by weight to 95% by weight, more preferably from 10% by weight to 95% by weight, and still more preferably from 20% by weight to 95% by weight, with respect to the total weight of the resin composition.

Reinforced fibers

Examples of the reinforced fibers include well-known reinforced fibers to be applied to the resin composition (for example, a carbon fiber (also referred to as a carbon fiber), a glass fiber, a metal fiber, an aramid fiber, or the like).

Among these, a carbon fiber and a glass fiber are preferable, and a carbon fiber is more preferable from a viewpoint of further improving the bending modulus of elasticity and the tensile modulus of elasticity.

As the carbon fiber, a well-known carbon fiber is used and any of a PAN-based carbon fiber and a pitch-based carbon fiber is used.

The carbon fiber may be subjected to a well-known surface treatment.

If the carbon fiber is a carbon fiber, examples of the surface treatment include oxidation treatment and sizing treatment.

Also, the fiber diameter and the fiber length of the carbon fiber are not particularly limited and may be selected depending on the use of the resin molded article.

Further, the shape of the carbon fiber is not particularly limited and may be selected depending on the use of the resin molded article. Examples of the shape of the carbon fiber include a fiber bundle composed of plural single fibers, a collected fiber bundle, and a fabric obtained by weaving a fiber two-dimensionally or three-dimensionally.

As the carbon fiber, a commercially available product may be used.

Examples of the commercially available product of the PAN-based carbon fiber include "Torayca (registered trademark)" manufactured by TORAY INDUSTRIES, INC., "TENAX" manufactured by TOHO TENAX Co., Ltd, and "PYROFIL (registered trademark)" manufactured by Mitsubishi Rayon Co., Ltd. Other examples of the commercially available product of the PAN-based carbon fiber include commercially available products manufactured by Hexcel Corporation, Cytec Industries Incorporated, DowAksa, Formosa Plastics Group, and SGL Carbon SE.

Examples of the commercially available product of the pitch-based carbon fiber include "Dialead (registered trademark)" manufactured by Mitsubishi Rayon Co., Ltd., "GRANOC" manufactured by Nippon Graphite Fiber Co., Ltd., and "KURECA" manufactured by KUREHA CORPORATION. Other examples of the commercially available product of the pitch-based carbon fiber include commercially available products manufactured by Osaka Gas Chemicals Co., Ltd. and Cytec Industries Incorporated.

Meanwhile, the glass fiber is not particularly limited and a well-known fiber such as a short fiber and a long fiber is used.

In addition, the glass fiber may be subjected to a well-known surface treatment.

As a surface treating agent used for the surface treatment, a silane-based coupling agent is exemplified from a viewpoint of affinity with polyolefin.

In addition, the fiber diameter and the fiber length of the glass fiber are not particularly limited and may be selected depending on the use of the resin molded article.

Further, the shape of the carbon fiber is not particularly limited and may be selected depending on the use of the resin molded article.

As the glass fiber, a commercially available product may be used and examples thereof include RS 240 QR-483 and RE 480 QB-550 manufactured by Nitto Boseki Co., Ltd.

One type of the reinforced fibers may be used alone or two or more types thereof may be used in combination.

The content of the reinforced fibers is preferably from 0.1 parts by weight to 200 parts by weight, more preferably from 1 part by weight to 180 parts by weight, and still more preferably from 5 parts by weight to 150 parts by weight, with respect to 100 parts by weight of the polycarbonate, which is a base material.

Since the reinforced fibers are included in the amount of 0.1 parts by weight or more with respect to 100 parts by weight of the polycarbonate, the resin composition is reinforced, and since the content of the reinforced fibers is 200 parts by weight or less with respect to 100 parts by weight of the polycarbonate, moldability becomes satisfactory at the time of obtaining the resin molded article.

In addition, in a case where the carbon fiber is used as the reinforced fibers, the content of the carbon fiber is preferably 80% by weight or more with respect to the total weight of the reinforced fibers.

Here, in below, the content (parts by weight) with respect to 100 parts by weight of the polycarbonate, which is a base material, may be abbreviated as "phr (per hundred resin)".

In a case where this abbreviation is used, the content of the reinforced fibers is from 0.1 phr to 200 phr.

Compatibilizer

The compatibilizer is a resin for increasing affinity of the polycarbonate, which is a base material, with the reinforced fibers. In addition, in a case where the resin composition includes a specific resin, the compatibilizer is a resin for increasing affinity of the polycarbonate, which is a base material, with the specific resin. Also, the compatibilizer has a reactive cyclic group.

The compatibilizer may be determined depending on the polycarbonate, which is a base material.

The compatibilizer has a structure that is the same as or compatible with the structure of the polycarbonate, which is a base material, and preferably includes a reactive cyclic group which reacts with a functional group of the specific resin in the part within the molecule.

Examples of the compatibilizer include a modified polymer (modified polystyrene, a modified styrene (meth)acrylate copolymer, a modified styrene (meth)acrylonitrile copolymer, modified polycarbonate, or the like) in which a modified moiety including a group having an oxazoline structure (an oxazoline group, an alkyl oxazoline group, or the like), a carboxylic anhydride residue (an maleic anhydride residue, a fumaric anhydride residue, a citric anhydride residue, or the like), and a residue of maleimides (a maleimide residue, a N-alkyl maleimide residue, a N-cycloalkyl maleimide residue, a N-phenyl maleimide residue, or the like), is introduced as the reactive cyclic group.

In addition, for the modified polymer, there is a method in which a compound including the aforementioned modified moiety is reacted with a polymer to be chemically bonded thereto directly, a method in which a graft chain is formed by using a compound including the aforementioned modified moiety so as to bond this graft chain to the polymer, and a method in which a monomer is copolymerized for forming a compound including the modified moiety and the polymer.

As the preferable compatibilizer, at least one type selected from the group consisting of oxazoline-modified polystyrene, maleic anhydride-modified polystyrene, and maleimide-modified polystyrene is preferable.

Examples of the oxazoline-modified polystyrene include a copolymer of a monomer having an oxazoline structure (2-vinyl-2-oxazoline, 5-methyl-2-vinyl-2-oxazoline, 2-phenyl-2-oxazoline, (R,R)-4,6-dibenzofuran diyl-2,2'-bis(4-phenyloxazoline), or the like) and styrenes (styrene, alkyl substituted styrene, halogen substituted styrene, vinyl naphthalene, hydroxystyrene, or the like).

Examples of the maleic anhydride-modified polystyrene include a copolymer of maleic anhydride and styrenes (styrene, alkyl substituted styrene, halogen substituted styrene, vinyl naphthalene, hydroxystyrene, or the like).

Examples of the maleimide-modified polystyrene include a copolymer of maleimides (maleimide, N-alkyl maleimide, N-cycloalkyl maleimide, N-phenyl maleimide, or the like) and styrenes (styrene, alkyl substituted styrene, halogen substituted styrene, vinyl naphthalene, hydroxystyrene, or the like).

As the modified polymer of the compatibilizer, a commercially available product may be used.

Examples of a commercially available product of the oxazoline-modified polystyrene include a series (K-2010E, K-2020E, K-2030E, RPS-1005) of EPOCROS (registered trademark) manufactured by NIPPON SHOKUBAI CO., LTD.

Examples of a commercially available product of the maleic anhydride-modified polystyrene include a series of Alastair (registered trademark) manufactured by Arakawa Chemical Industries, Ltd.

Examples of a commercially available product of the maleimide-modified polystyrene include a series (PSX 0371) of Polyimilex (registered trademark) manufactured by NIPPON SHOKUBAI CO., LTD.

The molecular weight of the compatibilizer is not particularly limited and the molecular weight is preferably in the range of from 5,000 to 100,000 and more preferably in the range of from 5,000 to 80,000 from a viewpoint of workability.

The molecular weight of the compatibilizer is preferably from 0.1 parts by weight to 20 parts by weight, more preferably from 0.1 parts by weight to 18 parts by weight, and still more preferably from 0.1 parts by weight to 15 parts by weight, with respect to 100 parts by weight of the polycarbonate, which is a base material.

Since the content of the compatibilizer is within the aforementioned range, affinity with the polycarbonate, which is a base material, is increased (in a case of including the specific resin, affinity with the specific resin is increased), and the bending modulus of elasticity and the tensile modulus of elasticity are improved.

In addition, in a case of including the specific resin, the content of the compatibilizer is preferably proportional to the content of the specific resin (indirectly proportional to the content of the reinforced fibers), from a viewpoint of effectively expressing the affinity of the polycarbonate, which is a base material, with the specific resin.

The content of the compatibilizer with respect to the weight of the reinforced fibers is preferably from 1% by weight to 15% by weight, more preferably from 1% by weight to 12% by weight, and still more preferably from 1% by weight to 10% by weight.

If the content of the compatibilizer with respect to the weight of the reinforced fibers is 1% by weight or more, it is easy to obtain affinity with the reinforced fibers (in a case of including the specific resin, it is easy to obtain affinity with the specific resin). If the content is 15% by weight or less (particularly, 10% by weight or less), an unreacted functional group which causes discoloration or deterioration is prevented from remaining.

Resin having a solubility parameter (SP value) different from that of polycarbonate and including at least one of amide bond and imide bond (Specific resin)

The specific resin includes a solubility parameter (SP value) and a particular moiety structure, so as to be able to coat the periphery of the reinforced fibers, as described above.

This specific resin will be described in detail.

First, the specific resin is a resin having a solubility parameter (SP value) different from that of the polycarbonate, which is a base material.

Here, the difference of the SP value between the polycarbonate and the specific resin is preferably 3 or more and more preferably from 3 to 6, from a viewpoint of compatibility and repulsion between the specific resin and the polycarbonate.

The SP value used herein is a value calculated by a Fedor's method. Specifically, the solubility parameter (SP value) is based on, for example, Polym. Eng. Sci., vol.14, p. 147 (1974) and the SP value is calculated according to the following equation.

$$\text{Equation: SP value} = \sqrt{(Ev/v)} = \sqrt{(\Sigma\Delta ei/\Sigma\Delta vi)}$$

(In the formula, Ev: evaporated energy (cal/mol), v: mole volume ($cm^3$/mol), $\Sigma\Delta ei$: evaporated energy of each atom or atom group, and $\Sigma\Delta vi$: mole volume of each atom or atom group)

In addition, the solubility parameter (SP value) uses $(cal/cm^3)^{1/2}$ as a unit, but the unit is omitted conventionally and written in a dimensionless manner.

In addition, the specific resin includes at least one of an imide bond or an amide bond within a molecule.

Since the specific resin includes an imide bond or an amide bond, affinity of the specific resin with a polar group present on the surface of the reinforced fibers is expressed.

As a specific type of the specific resin, a thermoplastic resin including at least one of the imide bond and the amide bond in a main chain is exemplified, and specific examples of the thermoplastic resin include polyamide (PA), polyimide (PI), polyamideimide (PAI), polyetherimde (PEI), and polyamino acid.

Since the specific resin preferably has low compatibility with the polycarbonate and a SP value different from the polycarbonate, which is a base material, the thermoplastic resin, which is different from the base material polycarbonate, is preferably used.

Among these, polyamide (PA) is preferable from a viewpoint of further improving the bending modulus of elasticity and the tensile modulus of elasticity and obtaining excellent adhesion to the reinforced fibers.

Here, the adhesion between the specific resin and the reinforced fibers is evaluated by an index such as interface shear strength.

The interface shear strength is measured by using a micro droplet method. Here, the micro droplet method is described using a schematic diagram of the test illustrated in Fig. 3.

The micro droplet method is a method for evaluating interface attachment properties of the both specific resin and reinforced fibers, by applying a liquid resin to a single fiber f, attaching a droplet D (also referred to as a resin particle or a resin ball) to fix this droplet D, and then conducting a drawing test of the single fiber f in an arrow direction.

The interface shear strength ($\tau$) is calculated based on this test using the following equation.

[Equation 1]

$$\tau = \frac{F}{d\pi L}$$

In the equation, $\tau$ represents the interface shear strength, F represents pull-out load, d represents a fiber diameter of the single fiber, and L represents a droplet length.

As the calculated value of the interface shear strength ($\tau$) is greater, it is indicated that adhesion between the reinforced fibers and the specific resin is high, which is an index that a resin molded article having the greater bending modulus of elasticity and tensile modulus elasticity is formed by selecting a combination of the reinforced fibers and the specific resin with a greater value.

Examples of the polyamide include a substance in which dicarboxylic acid and diamine are co-condensed and polymerized, a substance in which lactam is ring-open polymerized and condensed.

Examples of the dicarboxylic acid include oxalic acid, adipic acid, suberic acid, sebacic acid, terephthalic acid, isophthalic acid, 1,4-cyclohexane dicarboxylic acid, malonic acid, succinic acid, glutaric acid, pimelic acid, azelaic acid, and phthalic acid. Among these, adipic acid and terephthalic acid are preferable.

Examples of the diamine include ethylene diamine, pentamethylene diamine, hexamethylene diamine, nonane diamine, decamethylene diamine, 1,4-cyclohexane diamine, p-phenylene diamine, m-phenylene diamine, and m-xylene diamine, and among these, hexamethylene diamine is preferable.

Examples of lactam include ε-caprolactam, undecane lactam, and lauryl lactam, and among these, ε-caprolactam is preferable.

The polyamide is preferably polyamide (PA6) in which ε-caprolactam is ring-open polymerized and condensed, 6.6 nylon, 6.10 nylon, 1 to 12 nylons, MXD known as aromatic nylon, HT-1m, 6-T nylon, polyaminotriazole, polybenzimidazole, polyoxadiazole, polyamideimide, or piperazine-based polyimide, from a viewpoint of affinity (attachment properties) with the reinforced fibers and moldability of the resin molded article. Among these, 6.6 nylon is preferable.

The molecular weight of the specific resin is not particularly limited, as long as the specific resin is more easily thermally melted than the polycarbonate, which is a base material, coexisting in the resin composition. For example, if the specific resin is polyamide, the weight average molecular weight is preferably in the range of from 10,000 to 300,000 and more preferably in the range of from 10,000 to 100,000.

In addition, the glass transition temperature or the melting point of the specific resin is not particularly limited in the same manner as the molecular weight, as long as the specific resin is more easily thermally melted than the polycarbonate, which is a base material, coexisting in the resin composition. For example, if the specific resin is polyamide, the melting point (Tm) is preferably in the range of from 100°C to 400°C and more preferably in the range of from 150°C to 350°C.

The content of the specific resin is preferably from 0.1 parts by weight to 20 parts by weight, more preferably from 0.5 parts by weight to 20 parts by weight, and still more preferably from 1 part by weight to 20 parts by weight, with respect to 100 parts by weight of the polycarbonate, which is a base material.

Since the content of the specific resin is within the aforementioned range, affinity with the reinforced fibers is obtained and the bending modulus of elasticity and the tensile modulus of elasticity are improved.

The content of the specific resin is preferably proportional to the content of the aforementioned reinforced fibers from a viewpoint of effectively expressing affinity with the reinforced fibers.

The content of the specific resin with respect to the weight of the reinforced fibers is preferably from 1% by weight to 10% by weight, more preferably from 1% by weight to 9% by weight, and still more preferably from 1% by weight to 8% by weight.

If the content of the specific resin with respect to the weight of the reinforced fibers is 1% by weight or more, affinity of the specific resin with the reinforced fibers is easily obtained, and if the content of the specific resin with respect to the weight of the reinforced fibers is 10% by weight or less, resin fluidity is improved.

Other components

The resin composition according to the exemplary embodiment may include other components in addition to the aforementioned each component.

Examples of the other components include a well-known additive such as a flame retardant, a flame retardant promoter, an anti-sagging (dripping) agent when heated, a plasticizer, an antioxidant, a release agent, a light stabilizer, a weathering agent, a coloring agent, a pigment, a modifier, an antistatic agent, a hydrolysis inhibitor, a filler, a reinforcing agent other than the reinforced fibers (talc, clay, mica, glass flake, milled glass, glass beads, crystalline silica, alumina, silicon nitride, aluminium nitride, boron nitride, or the like).

The content of the other components is preferably, for example, from 0 parts by weight to 10 parts by weight and more preferably from 0 parts by weight to 5 parts by weight with respect to 100 parts by weight of the polycarbonate, which is a base material. Here, the "0 parts by weight" means a state where the other components are not included.

Method for preparing resin composition

The resin composition according to the exemplary embodiment is prepared by molten kneading the aforementioned each component.

Here, well-known means is used as means for molten kneading, and examples thereof include a twin-screw extruder, HENSCHEL MIXER, a banbury mixer, a single-screw extruder, a multi-screw extruder, and a co-kneader.

The temperature (cylinder temperature) at the time of molten kneading may be determined depending on the melting point of the resin component configuring the resin composition.

In particular, the resin composition according to the exemplary embodiment is preferably obtained by a preparing method including molten kneading the polycarbonate, the reinforced fibers, the specific resin, and the compatibilizer. If the polycarbonate, the reinforced fibers, the specific resin, and the compatibilizer are integrally molten kneaded, a coating layer by the specific resin is easily formed in a thin and almost uniform state in the periphery of the reinforced fibers and the bending modulus of elasticity and tensile modulus of elasticity are increased.

Resin molded article

The resin molded article according to the exemplary embodiment includes the polycarbonate, the reinforced fibers, the resin (specific resin) having a solubility parameter (SP value) different from that of the polycarbonate and including at least one of an amide bond and an imide bond, and the compatibilizer. That is, the resin molded article according to the exemplary embodiment is configured by the same composition as that of the resin composition according to the exemplary embodiment. In addition, the resin having a solubility parameter (SP value) different from that of the polycarbonate and including at least one of an amide bond and an imide bond forms a coating layer in the periphery of the reinforced fibers, and the thickness of the coating layer is from 50 nm to 700 nm.

In addition, the resin molded article according to the exemplary embodiment may be obtained by preparing the resin composition according to the exemplary embodiment and molding this resin composition, and may be obtained by preparing a composition including the components other than the reinforced fibers and mixing the composition and the reinforced fibers at the time of molding.

As a molding method, for example, injection molding, extrusion molding, blow molding, hot press molding, calendar molding, coating molding, cast molding, dipping molding, vacuum molding, transfer molding, or the like may be applied.

The molding method of the resin molded article according to the exemplary embodiment is preferably injection molding from a viewpoint of obtaining high freedom in a shape.

The cylinder temperature of the injection molding is, for example, from 180°C to 300°C and preferably from 200°C to 280°C. The die temperature of the injection molding is, for example, from 30°C to 100°C and preferably from 30°C to 60°C.

A commercially available apparatus such as NEX 150 manufactured by NISSEI PLASTIC INDUSTRIAL CO., LTD., NEX 70000 manufactured by NISSEI PLASTIC INDUSTRIAL CO., LTD., and SE 50D manufactured by TOSHIBA MACHINE CO., LTD. may be used to perform the injection molding.

The resin molded article according to the exemplary embodiment may be appropriately used for the purpose such as electronic and electric devices, office supplies, home appliances, interior materials for automobiles, containers, or the like, and more specifically, housings of electron and electric devices or home appliances; various parts of electronic and electric devices or home appliances; interior parts of automobiles; storage cases of CD-ROM or DVD; tableware; drink bottles; food trays; wrapping materials; films; sheets; or the like.

In particular, in the resin molded article according to the exemplary embodiment, since reinforced fibers are applied as the reinforced fibers, the resin molded article having more excellent mechanical strength is obtained. Thus, the resin molded article is proper to be used for replacing metal parts.

Examples

The exemplary embodiment of the invention will be described using the following Examples, but the exemplary embodiment of the invention is not limited to these Examples.

Examples 1 to 25 and Comparative Examples 1 to 12

The components shown in Tables 1 to 5 (the numerical value in tables indicates the number of parts) are kneaded at the cylinder temperature of 200°C by a twin screw kneader (TEM 58SS manufactured by TOSHIBA MACHINE CO., LTD.) to obtain a pellet of the resin composition.

An ISO multipurpose dumbbell test piece (corresponding to an ISO 527 tensile test and an ISO 178 bending test) (test part thickness of 4 mm and width of 10 mm) and a D2 test piece (length of 60 mm, width of 60 mm, and thickness of 2 mm) are molded using the obtained pallet by an injection molding machine (NISSEI PLASTIC INDUSTRIAL CO., LTD., NEX 150) at the cylinder temperature of 270°C and the die temperature of 50°C.

Evaluation

Evaluation is performed as follows using the obtained two types of the test pieces.

The evaluation results are shown in Tables 1 to 5.

Tensile modulus of elasticity and stretching

The tensile modulus of elasticity and stretching are measured with respect to the obtained ISO multipurpose dumbbell test piece using an evaluation apparatus (manufactured by Shimazu Corporation, precise universal tester Autograph AG-IS 5 kN) according to the method based on ISO527.

Bending modulus of elasticity

The bending modulus of elasticity is measured with respect to the obtained ISO multipurpose dumbbell test piece using a universal testing machine (manufactured by Shimazu Corporation, Autograph AG-Xplus) according to the method based on ISO178.

Heat distortion temperature (HDT)

The heat distortion temperature (°C) in the load of 1.8 MPa is measured with respect to the obtained ISO multipurpose dumbbell test piece using a HDT measuring apparatus (manufactured by TOYO SEIKI Co., Ltd., HDT-3) according to the method based on the ISO178 bending test.

Dimensional change rate

The obtained D2 test piece is kept alone under a condition of 28°C and 31%RH for 24 hours and the dimensional change rate (%) of the test piece before and after being kept alone is measured in the TD direction and the MD direction of the test piece, respectively.
In addition, the dimensional change is measured by a measuring microscope (manufactured by OLYUMPUS CORPORATION, STM6-LM).

Thickness measurement of coating layer

The thickness of the coating layer is measured using the obtained D2 test piece according to a well-known method. In addition, before the measurement, the presence of the coating layer is confirmed.

[Table 1]

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Composition | Thermoplastic resin | Polycarbonate 1 | 100 | 100 | 100 | 100 | 100 | 100 | 100 | 100 | 100 | 100 |
| | | Polycarbonate 2 | | | | | | | | | | |
| | Reinforced fibers | Carbon fibers (surface treated) | 5 | 200 | 25 | 5 | 200 | 25 | 25 | 25 | 25 | 25 |
| | | Carbon fibers (surface untreated) | | | | | | | | | | |
| | | Glass fibers | | | | | | | | | | |
| | Specific resin | Polyamide (PA6) | | | | 0.1 | 20 | 5 | | | | |
| | | Polyamide (PA66) | | | | | | | 5 | | | 5 |
| | | Polyamide (PA6T) | | | | | | | | 5 | | |
| | | Polyamide (PA 11) | | | | | | | | | 5 | |
| | Compatibilizer | Oxazoline-modified PSt | 0.1 | 20 | 3 | 0.1 | 20 | 3 | 3 | 3 | 3 | |
| | | Maleic anhydride-modified Pst | | | | | | | | | | 3 |
| | | Maleimide-modified PSt | | | | | | | | | | |
| | Total | | 105.1 | 320 | 128 | 105.2 | 340 | 133 | 133 | 133 | 133 | 133 |
| Conditions | Molten kneading temperature (°C) | | 260 | 260 | 260 | 260 | 260 | 260 | 260 | 260 | 260 | 260 |
| | Injection molding temperature (°C) | | 260 | 260 | 260 | 260 | 260 | 260 | 290 | 290 | 260 | 260 |
| Evaluation | Tensile strength (Mpa) | | 95 | 267 | 159 | 96 | 272 | 165 | 172 | 168 | 165 | 148 |
| | Stretching (%) | | 3.7 | 0.5 | 0.5 | 3.4 | 0.5 | 0.5 | 0.6 | 0.5 | 0.5 | 0.5 |
| | Bending modulus of elasticity (Gpa) | | 3.4 | 40.2 | 22.5 | 3.4 | 42.1 | 23.1 | 24.8 | 25.1 | 23.1 | 18.2 |
| | Heat distortion temperature HDT(°C) | | 145 | 223 | 182 | 151 | 231 | 178 | 175 | 174 | 168 | 172 |
| | Dimensional change rate TD/MD (%) | | 0.5/0.4 | 0.1/0.08 | 0.2/0.1 | 0.5/0.4 | 0.1/0.08 | 0.2/0.1 | 0.2/0.1 | 0.2/0.1 | 0.2/0.1 | 0.2/0.1 |
| | Thickness of coating layer (nm) | | 102 | 105 | 121 | 184 | 221 | 198 | 250 | 241 | 242 | 205 |

[Table 2]

| | | | Example 11 | Example 12 | Example 13 | Example 14 | Example 15 | Example 16 | Example 17 | Example 18 | Example 19 | Example 20 |
|---|---|---|---|---|---|---|---|---|---|---|---|---|
| Composition | Thermoplastic resin | Polycarbonate 1 | 100 | 100 | 100 | 100 | 100 | 100 | 100 | | | |
| | | Polycarbonate 2 | | | | | | | | 100 | 100 | 100 |
| | Reinforced fibers | Carbon fibers (surface treated) | 25 | | | | | | | 5 | 200 | 25 |
| | | Carbon fibers (surface untreated) | | 200 | 25 | | | 200 | 25 | | | |
| | | Glass fibers | | | | 5 | 100 | 5 | 100 | | | |
| | Specific resin | Polyamide (PA6) | | 20 | 5 | 5 | 5 | 20 | 5 | | | |
| | | Polyamide (PA66) | 5 | | | | | | | | | |
| | | Polyamide (PA6T) | | | | | | | | | | |
| | | Polyamide (PA11) | | | | | | | | | | |
| | Compatibilizer | Oxazoline-modified PSt | | 20 | 3 | 3 | 3 | 20 | 3 | 0.1 | 20 | 3 |
| | | Maleic anhydride-modified Pst | | | | | | | | | | |
| | | Maleimide-modified PSt | 3 | | | | | | | | | |
| | Total | | 133 | 340 | 133 | 113 | 208 | 345 | 233 | 105.1 | 320 | 128 |
| Conditions | Molten kneading temperature (°C) | | 260 | 260 | 260 | 260 | 260 | 260 | 260 | 260 | 260 | 260 |
| | Injection molding temperature (°C) | | 260 | 260 | 260 | 260 | 260 | 260 | 260 | 260 | 260 | 260 |
| Evaluation | Tensile strength (Mpa) | | 144 | 2001 | 167 | 87 | 155 | 285 | 201 | 94 | 154 | 132 |
| | Stretching (%) | | 0.5 | 0.1 | 0.4 | 5.5 | 0.1 | 0.3 | 0.1 | 3.5 | 0.3 | 0.5 |
| | Bending modulus of elasticity (Gpa) | | 17.4 | 42.2 | 23.2 | 4.1 | 20.1 | 45.5 | 35.5 | 3.4 | 40.3 | 21.7 |
| | Heat distortion temperature HDT(°C) | | 174 | 222 | 169 | 135 | 201 | 231 | 151 | 131 | 228 | 148 |
| | Dimensional change rate TD/MD (%) | | 0.2/0.1 | 0.1/0.08 | 0.2/0.1 | 0.4/0.3 | 0.2/0.1 | 0.1/0.08 | 0.2/0.1 | 0.5/0.4 | 0.1/0.08 | 0.2/0.1 |
| | Thickness of coating layer (nm) | | 217 | 302 | 298 | 105 | 168 | 302 | 102 | 142 | 105 | 103 |

[Table 3]

| | | | Example 21 | Example 22 | Example 23 | Example 24 | Example 25 |
|---|---|---|---|---|---|---|---|
| Composition | Thermoplastic resin | Polycarbonate 1 | | | | 100 | 100 |
| | | Polycarbonate 2 | 100 | 100 | 100 | | |
| | Reinforced fibers | Carbon fibers (surface treated) | 5 | 200 | 25 | 200 | 25 |
| | | Carbon fibers (surface untreated) | | | | | |
| | | Glass fibers | | | | | |
| | Specific resin | Polyamide (PA6) | 0.1 | 20 | 5 | | |
| | | Polyamide (PA66) | | | | 20 | 5 |
| | | Polyamide (PA6T) | | | | | |
| | | Polyamide (PA11) | | | | | |
| | Compatibilizer | Oxazoline-modified PSt | 0.1 | 20 | 3 | 20 | 3 |
| | | Maleic anhydride-modified Pst | | | | | |
| | | Maleimide-modified PSt | | | | | |
| | | Total | 105.2 | 340 | 133 | 340 | 133 |
| Conditions | | Molten kneading temperature (°C) | 260 | 260 | 260 | 260 | 260 |
| | | Injection molding temperature (°C) | 260 | 260 | 260 | 260 | 260 |
| Evaluation | | Tensile strength (Mpa) | 101 | 269 | 151 | 273 | 106 |
| | | Stretching (%) | 3.5 | 0.1 | 0.3 | 0.1 | 0.2 |
| | | Bending modulus of elasticity (Gpa) | 3.7 | 42.3 | 22.8 | 42.5 | 22.7 |
| | | Heat distortion temperature HDT(°C) | 136 | 231 | 147 | 221 | 153 |
| | | Dimensional change rate TD/MD (%) | 0.4/0.3 | 0.1/0.08 | 0.2/0.1 | 0.1/0.08 | 0.2/0.1 |
| | | Thickness of coating layer (nm) | 258 | 304 | 241 | 215 | 216 |

[Table 4]

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|---|
| Composition | Thermoplastic resin | Polycarbonate 1 | 100 | 100 | 100 | 100 | 100 | | | | | |
| | | Polycarbonate 2 | | | | | | 100 | 100 | 100 | 100 | 100 |
| | Reinforced fibers | Carbon fibers (surface treated) | 5 | 200 | 25 | | | 5 | 200 | 25 | | |
| | | Carbon fibers (surface untreated) | | | | 25 | | | | | 25 | |
| | | Glass fibers | | | | | 5 | | | | | 5 |
| | Polyamide (PA6) | | | | | | | | | | | |
| | Specific resin | Polyamide (PA66) | | | | | | | | | | |
| | | Polyamide (PA6T) | | | | | | | | | | |
| | | Polyamide (PA11) | | | | | | | | | | |
| | Compatibilizer | Oxazoline-modified PSt | | | | | | | | | | |
| | | Maleic anhydride-modified PSt | | | | | | | | | | |
| | | Maleimide-modified PSt | | | | | | | | | | |
| | Total | | 105 | 300 | 125 | 125 | 105 | 105 | 300 | 125 | 125 | 105 |
| Conditions | Molten kneading temperature (°C) | | 260 | 260 | 260 | 260 | 260 | 260 | 260 | 260 | 260 | 260 |
| | Injection molding temperature (°C) | | 260 | 260 | 260 | 260 | 260 | 260 | 260 | 260 | 260 | 260 |
| | Tensile strength (Mpa) | | 71 | 112 | 88.2 | 85.2 | 66 | 89 | 112 | 79.5 | 80.2 | 62 |

(continued)

| | | Compara-tive Example 1 | Compara-tive Example 2 | Compara-tive Example 3 | Compara-tive Example 4 | Compara-tive Example 5 | Compara-tive Example 6 | Compara-tive Example 7 | Compara-tive Example 8 | Compara-tive Example 9 | Compara-tive Example 10 |
|---|---|---|---|---|---|---|---|---|---|---|---|
| Evaluation | Stretching (%) | 2.9 | 0.1 | 0.2 | 0.3 | 4.2 | 5.2 | 0.1 | 0.1 | 0.2 | 5.1 |
| | Bending modulus of elasticity (Gpa) | 2.9 | 2.9 | 11.5 | 10.2 | 3.2 | 3.5 | 31.2 | 10.6 | 9.4 | 2.9 |
| | Heat distortion temperature HDT(°C) | 132 | 221 | 165 | 132 | 128 | 128 | 189 | 145 | 129 | 114 |
| | Dimensional change rate TD/MD (%) | 0.5/0.4 | 0.3/0.3 | 0.4/0.4 | 0.4/0.4 | 0.6/0.5 | 0.5/0.4 | 0.3/0.3 | 0.4/0.4 | 0.4/0.4 | 0.6/0.5 |
| | Thickness of coating layer (nm) | 0 | 0 | 0 | 0 | 0 | 0 | 0 | 0 | 0 | 0 |

## EP 3 222 653 A1

[Table 5]

| | | | Comparative Example 11 | Comparative Example 12 |
|---|---|---|---|---|
| Composition | Thermoplastic resin | Polycarbonate 1 | | |
| | | Polycarbonate 2 | 100 | 100 |
| | Reinforced fibers | Carbon fibers (surface treated) | 25 | 25 |
| | | Carbon fibers (surface untreated) | | |
| | | Glass fibers | | |
| | Specific resin | Polyamide (PA6) | 0.1 | 20 |
| | | Polyamide (PA66) | | |
| | | Polyamide (PA6T) | | |
| | | Polyamide (PA11) | | |
| | Compatibilizer | Oxazoline-modified PSt | | |
| | | Maleic anhydride-modified Pst | | |
| | | Maleimide-modified PSt | | |
| | Total | | 125.1 | 145 |
| Conditions | Molten kneading temperature (°C) | | 260 | 260 |
| | Injection molding temperature (°C) | | - | - |
| Evaluation | Tensile strength (Mpa) | | Resin is decomposed by extrusion molding | Resin is decomposed by extrusion molding |
| | | Stretching (%) | - | - |
| | | Bending modulus of elasticity (Gpa) | - | - |
| | | Heat distortion temperature HDT(°C) | - | - |
| | | Dimensional change rate TD/MD (%) | - | - |
| | | Thickness of coating layer (nm) | - | - |

In addition, the details of the type of materials in Tables 1 to 5 are as follows.

Polycarbonate

- Polycarbonate 1: Panlite (registered trademark) 1225L, manufactured by TEIJIN LIMITED.), SP value = 9.7
- Polycarbonate 2: Tarflon Neo (registered trademark) AG 1950, manufactured by Idemitsu Kosan Co., Ltd., SP value = 1 0.3

Carbon fiber

- Carbon fiber (surface treated): Torayca (registered trademark)-based T300 manufactured by TORAY INDUSTRIES, INC.
- Carbon fiber (surface untreated): fiber obtained by dipping the Torayca in a solvent to remove a sizing agent
- Glass fiber: RS 240 QR-483, manufactured by Nitto Boseki Co., Ltd., surface treated with a silica-based surface treating agent

Specific resin

- Polyamide (PA6): ZYTEL (registered trademark) 7331J, manufactured by DuPont Kabushiki Kaisha, SP value = 13.6
- Polyamide (PA66): 101L, manufactured by DuPont Kabushiki Kaisha, SP value = 11.6
- Polyamide (PA6T): TY-502NZ, manufactured by TOYOBO CO., LTD., SP value = 13.5
- Polyamide (PA11): Rilsan (registered trademark) PA11, Arkema K.K., SP value = 12.7

Compatibilizer

- Oxazoline-modified PSt: oxazoline-modified polystyrene (Epocros? (registered trademark) RPS1005, manufactured by NIPPON SHOKUBAI CO., LTD., a vinyloxazoline·styrene copolymer)
- Maleic anhydride-modified PSt: maleic anhydride-modified polystyrene (Alastair (registered trademark) 700,
- Maleimide-modified PSt: maleimide-modified polystyrene (Polyimilex (registered trademark) PSX0371, manufactured by NIPPON SHOKUBAI CO., LTD., a N-phenyl maleimide·styrene copolymer)

From the above results, it is understood that the a molded article having the both excellent bending modulus of elasticity and tensile modulus of elasticity is obtained in the present Examples, compared to Comparative Examples.

In addition, as a result of observing the coating layer of Examples (for example, Example 5 or the like) by Scanning Electron Microscope (SEM), it is confirmed that the coating layer is formed in the periphery of the carbon fiber in an almost uniform state.

In addition, as a result of analyzing the molded article fabricated in Examples (for example, Example 5 or the like) according to a well-known method, it is confirmed that the layer of the used compatibilizer (the layer of oxazoline-modified polystyrene, the layer of maleic anhydride-modified polystyrene, and the layer of maleimide-modified polystyrene) is inserted between the coating layer and the polycarbonate (the layer of the compatibilizer is formed on the surface of the coating layer).

**Claims**

1. A resin composition comprising:

    polycarbonate;
    reinforced fibers; and
    a compatibilizer having a reactive cyclic group.

2. The resin composition according to Claim 1,
    wherein the compatibilizer is at least one selected from the group consisting of oxazoline-modified polystyrene, maleic anhydride-modified polystyrene, and maleimide-modified polystyrene.

3. The resin composition according to Claim 1 or 2,
    wherein a content of the reinforced fibers is from 0.1 parts by weight to 200 parts by weight with respect to 100 parts by weight of the polycarbonate.

4. The resin composition according to any one of Claims 1 to 3,

wherein a content of the compatibilizer is from 0.1 parts by weight to 20 parts by weight with respect to 100 parts by weight of the polycarbonate.

5. The resin composition according to any one of Claims 1 to 4,
wherein a content of the compatibilizer is from 1% by weight to 15% by weight with respect to the weight of the reinforced fibers.

6. The resin composition according to any one of Claims 1 to 5, further comprising:

a resin having a solubility parameter being different from that of the polycarbonate and having at least one of an amide bond and an imide bond.

7. The resin composition according to Claim 6,
wherein the resin having a solubility parameter being different from that of the polycarbonate and having at least one of an amide bond and an imide bond forms a coating layer in periphery of the reinforced fibers and a thickness of the coating layer is from 50 nm to 700 nm.

8. The resin composition according to Claim 7,
wherein a layer of the compatibilizer is inserted between the coating layer and the polycarbonate.

9. The resin composition according to any one of Claims 6 to 8,
wherein the resin having a solubility parameter being different from that of the polycarbonate and having at least one of an amide bond and an imide bond is polyamide.

10. The resin composition according to any one of Claims 6 to 9,
wherein a content of the resin having a solubility parameter being different from that of the polycarbonate and having at least one of an amide bond and an imide bond is from 0.1 parts by weight to 20 parts by weight with respect to 100 parts by weight of the polycarbonate.

11. A resin molded article comprising:

polycarbonate;
reinforced fibers; and
a compatibilizer having a reactive cyclic group.

12. The resin molded article according to Claim 11,
wherein the compatibilizer is at least one selected from the group consisting of oxazoline-modified polystyrene, maleic anhydride-modified polystyrene, and maleimide-modified polystyrene.

13. The resin molded article according to Claim 11 or 12,
wherein a content of the reinforced fibers is from 0.1 parts by weight to 200 parts by weight with respect to 100 parts by weight of the polycarbonate.

14. The resin molded article according to any one of Claims 11 to 13,
wherein a content of the compatibilizer is from 0.1 parts by weight to 20 parts by weight with respect to 100 parts by weight of the polycarbonate.

15. The resin molded article according to any one of Claims 11 to 14,
wherein a content of the compatibilizer is from 1% by weight to 15% by weight with respect to the weight of the reinforced fibers.

16. The resin molded article according to any one of Claims 11 to 15, further comprising:

a resin having a solubility parameter being different from that of the polycarbonate and having at least one of an amide bond and an imide bond.

17. The resin molded article according to Claim 16,
wherein the resin having a solubility parameter being different from that of the polycarbonate and having at least one of an amide bond and an imide bond forms a coating layer in periphery of the reinforced fibers and a thickness of the coating layer is from 50 nm to 700 nm.

18. The resin molded article according to Claim 17,
wherein a layer of the compatibilizer is inserted between the coating layer and the polycarbonate.

19. The resin composition according to any one of Claims 16 to 18,
wherein a content of the resin having a solubility parameter being different from that of the polycarbonate and having at least one of an amide bond and an imide bond is from 1% by weight to 10% by weight with respect to the weight of the reinforced fibers.

20. A method for preparing a resin composition comprising:

molten kneading polycarbonate, reinforced fibers, and compatibilizer having a reactive cyclic group.

FIG. 1

FIG. 2

FIG. 3

Europäisches
Patentamt

European
Patent Office

Office européen
des brevets

**EUROPEAN SEARCH REPORT**

Application Number

EP 16 18 5454

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 930 374 A1 (TORAY INDUSTRIES [JP]) 11 June 2008 (2008-06-11) | 1-5, 11-15 | INV. C08J5/04 C08L69/00 |
| A | * paragraph [0161] - paragraph [0213]; claims 6-10, 15, 21, 36-41, 46; example 8 * | 6-10, 16-20 | |
| | ----- | | |
| X | CN 103 709 708 A (SHANGHAI SUNNY NEW TECHNOLOGY DEV CO LTD) 9 April 2014 (2014-04-09) | 1-5, 11-15,20 | |
| A | * paragraph [0011] - paragraph [0049]; claim 5; examples 3-7 * | 6-10, 16-19 | |
| | ----- | | |
| X | CN 103 254 640 A (CHANGSHU KANGBAO MEDICAL APPLIANCE FACTORY) 21 August 2013 (2013-08-21) | 1-6,9, 11-16,20 | |
| A | * paragraph [0008] - paragraph [0021]; claims 1, 5; examples 1-4 * | 7,8,10, 17-19 | |
| | ----- | | |
| X | US 2015/353732 A1 (WANG HUANBING [CN]) 10 December 2015 (2015-12-10) | 1,3-5, 11, 13-15,20 | |
| | | | TECHNICAL FIELDS SEARCHED (IPC) |
| A | * paragraph [0218] - paragraph [0279]; examples Work 1F, Work 2F, work 3F, Work 1G, Work 2G, Work; tables 1, 7, 8, 10 * | 2,6-10, 12,16-19 | C08L C08K C08J |
| | ----- | | |

The present search report has been drawn up for all claims

| Place of search | Date of completion of the search | Examiner |
|---|---|---|
| The Hague | 13 July 2017 | Enescu, Cristina |

EPO FORM 1503 03.82 (P04C01)

## ANNEX TO THE EUROPEAN SEARCH REPORT
## ON EUROPEAN PATENT APPLICATION NO.

EP 16 18 5454

This annex lists the patent family members relating to the patent documents cited in the above-mentioned European search report.
The members are as contained in the European Patent Office EDP file on
The European Patent Office is in no way liable for these particulars which are merely given for the purpose of information.

13-07-2017

| Patent document cited in search report | | Publication date | Patent family member(s) | | Publication date |
|---|---|---|---|---|---|
| EP 1930374 | A1 | 11-06-2008 | EP JP KR TW US WO | 1930374 A1<br>WO2007037260 A1<br>20080063775 A<br>200732388 A<br>2009143524 A1<br>2007037260 A1 | 11-06-2008<br>09-04-2009<br>07-07-2008<br>01-09-2007<br>04-06-2009<br>05-04-2007 |
| CN 103709708 | A | 09-04-2014 | NONE | | |
| CN 103254640 | A | 21-08-2013 | NONE | | |
| US 2015353732 | A1 | 10-12-2015 | CN EP KR US WO | 106536627 A<br>3152258 A1<br>20170005429 A<br>2015353732 A1<br>2015189753 A1 | 22-03-2017<br>12-04-2017<br>13-01-2017<br>10-12-2015<br>17-12-2015 |

EPO FORM P0459

For more details about this annex : see Official Journal of the European Patent Office, No. 12/82

## REFERENCES CITED IN THE DESCRIPTION

**Patent documents cited in the description**

- JP 6057640 A
- WO 2007037260 A

**Non-patent literature cited in the description**

- *Polym. Eng. Sci.,* 1974, vol. 14, 147